Europäisches Patentamt

European Patent Office

Office européen des brevets

Veröffentlichungsnummer: **0 297 333**
**A1**

# EUROPÄISCHE PATENTANMELDUNG

Anmeldenummer: 88109364.5

Anmeldetag: 13.06.88

Int. Cl.4 **D01H 9/18 , B65G 19/02 ,**
**B65G 17/48**

Priorität: 01.07.87 DE 3721656

Veröffentlichungstag der Anmeldung:
**04.01.89 Patentblatt 89/01**

Benannte Vertragsstaaten:
**CH DE FR IT LI**

Anmelder: **LOUIS SCHIERHOLZ GMBH &
CO.KG**
**Arsterdamm 110**
**D-2800 Bremen 61(DE)**

Erfinder: **Langen, Manfred**
**Schulstrasse 58**
**D-4050 Mönchengladbach(DE)**
Erfinder: **Gebald, Gregor**
**Leppershütte 49**
**D-4050 Mönchengladbach(DE)**
Erfinder: **Wenger, Hartmut**
**Speckmannsweg 8**
**D-3008 Garbsen 7(DE)**

Vertreter: **von Creytz, Dietrich, Dipl.-Phys.**
**Tannenweg 25**
**D-5144 Wegberg-Beeck(DE)**

## Spulentransportmittel.

Mit textilen Fäden bewickelte Spulen können an einem Trolleyzug in einer der Teilung der Spinnmaschine entsprechend dichten Folge in einer Reihe pendelnd angehängt werden, ohne daß bei Umlenkung des Trolleyzugs aus der Horizontalen schräg nach oben oder unten die Gefahr einer gegenseitigen Reibung der Spulen besteht, wenn die Spulen paarweise an einer um eine vertikale Achse drehbaren Brücke am Trolleyzug befestigt werden und die Brücke vor Einlauf des Zugs in eine Schräge um 90° um die vertikale Brückenachse geschwenkt wird.

Fig. 1

## Spulentransportmittel

Die Erfindung betrifft ein Spulentransportmittel mit einem Trolleyzug zum Transport einzeln in einer Reihe pendelnd hängender Spulen, insbesondere bespulter Flyerhülsen, wobei jeder Spule eine an eine Aufnahme des Trolleyzugs anzuschließende Drehpendelaufhängung zugeordnet ist. Sie betrifft ferner ein Verfahren zum Betrieb des Spulentransportmittels.

In der Textilindustrie werden Spulen, die mit einem gegen Stoß oder gegenseitige Reibung der Spulenkörper empfindlichen Garn bewickelt sind, mit Hilfe einer in die Spulenhülse einzuführenden Drehaufhängung von einer Lieferstelle, z. B. einer Spindel, abgehoben und mit Hilfe eines Trolleyzugs, an dem die Drehaufhängung befestigt ist, zur Weiterverarbeitung, zu einem Zwischenlager oder zum Versand gebracht.

An dem Trolleyzug werden die einzelnen bewickelten Spulen in einer Reihe mit einer durch die Spinnmaschine bestimmt vorgegebenen Teilung angehängt. Der gegenseitige Abstand kann in der Größenordnung von 5 mm liegen. Bei normalem horizontalem Lauf tritt dann eine störende gegenseitige Berührung der Wickelkörper nicht ein. Probleme ergeben sich jedoch, wenn die Spulen, die aus Gründen der Rationalisierung im allgemeinen voll mit Material gefüllt sein sollen, auf dem Transportweg eine Höhendifferenz z. B. auf dem Weg in eine andere Etage des Fabrikationsbetriebs, überwinden müssen. Zwar kann man einen Trolleyzug mit Kardangelenken ausstatten, so daß der Zug problemlos jeder Umlenkung in verti kaler oder horizontaler Richtung folgen könnte, beim Transport schräg nach oben oder unten wird jedoch der horizontale Abstand von Spule zu Spule geringer, so daß sich die einzelnen Spulenkörper mehr oder weniger stark berühren und aneinander reiben. Wenn eine solche gegenseitige Berührung bei empfindlichem Garn nicht zulässig ist, kann der der Spinnmaschine zugeordnete Trolleyzug unmittelbar nur für den horizontalen Transport eingesetzt werden. Für eine Bewegung mit erheblicher vertikaler Komponente müssen die Spulen auf andere Weise transportiert werden.

Der Erfindung liegt die Aufgabe zugrunde, das Spulentransportmittel eingangs genannter Art so zu verbessern, daß der Trolleyzug - bei durch die Spinnmaschine vorgegebenem Abstand von Spule zu Spule - Wege schräg nach oben oder schräg nach unten einschließlich der damit erforderlichen Übergänge aus der Horizontalen heraus bzw. in die Horizontale zurück ausführen kann, ohne daß normalerweise die Gefahr einer gegenseitigen Beschädigung der Wickelkörper der benachbart pendelnd aufgehängten Spulen in Kauf zu nehmen wäre. Die erfindungsgemäße Lösung besteht für das eingangs genannte Transportmittel an einem Trolleyzug, in welchem jeder Spule eine an eine Aufnahme des Trolleyzugs anzuschliessende Drehpendelaufhängung zugeordnet ist, darin, daß je zwei Drehpendelaufhängungen in einem durch den jeweiligen Spulendurchmesser bestimmten Mindestabstand an einem um eine im wesentlichen vertikale Achse schwenkbar an der Aufnahme des Trolleyzugs angebrachten Bügel zusammengefaßt sind.

Durch die Erfindung wird erreicht, daß der Abstand von Spule zu Spule willkürlich von einem durch die Teilung der Spinnmaschine vorgegebenen minimalen Wert auf mehr als das Doppelte dieses Mindestwertes zu vergrößern ist, wenn jedes an einem Bügel hängende Spulenpaar durch Schwenken des Bügels um 90$^\bullet$ aus der Position in der Einzelreihe in eine Position nebeneinander unter Bildung einer Doppelreihe gebracht wird. Gemäß weiterer Erfindung läßt sich also der Abstand von Spule zu Spule in Richtung des Trolleyzugs, bei Bedarf, insbesondere bei Erreichen einer Umlenkung des Zugs aus der Horizontalen nach oben oder unten, durch Schwenken der Bügel um 90$^\bullet$ verdoppeln.

Anhand der schematischen Zeichnung werden Einzelheiten der Erfindung erläutert. Es zeigen:

Fig. 1 einen Teil eines horizontal laufenden Trolleyzugs mit daran in einer Reihe pendelnd angehängten Spulen; und

Fig. 2 einen schräg von unten nach oben laufenden Trolleyzug mit daran paarweise nebeneinander angehängten Spulen.

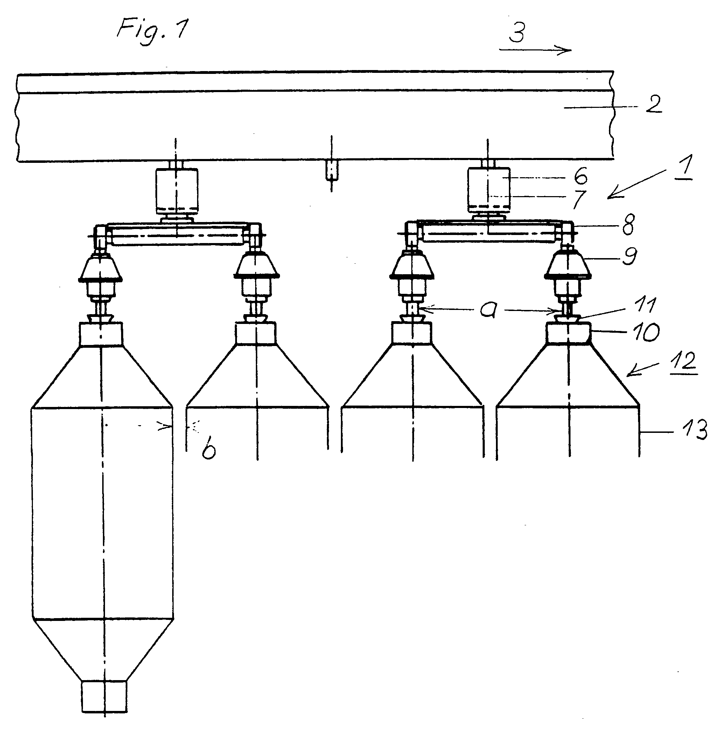

Fig. 1 zeigt einen Abschnitt eines insgesamt mit 1 bezeichneten Trolleyzugs, der auf einer Schiene 2 in Transportrichtung 3 bewegt wird. Der Trolleyzug besteht aus über Kardangelenken 4 miteinander verbundenen Zugkörpern 5. An der Unterseite jedes dieser Zugkörper 5 wird ein Kupplungsstück 6 angesetzt, an dem drehbar um eine vertikale Achse 7 eine Brücke 8 schwenkbar um die Achse 7 hängt. An jeder Brücke 8 werden in einem vorgegebenen Abstand a zwei Drehpendelaufhängungen 9 befestigt, die einen axial in eine Spulenhülse 10 einzuführenden Zapfen 11 besitzen. An jeder der Drehpendelaufhängungen 9 hängt eine insgesamt mit 12 bezeichnete Spule. Der gegenseitige Abstand der Spulen 12 wird durch den Abstand a der Drehpendelaufhängungen 9 so eingestellt, daß sich die Wickelkörper 13 der Spulen bei in einer horizontalen Schiene 2 bewegtem Trolleyzug 1 gerade nicht berühren.

Im Gegensatz zu dem Ausführungsbeispiel nach Fig. 1 werden die Drehpendelaufhängungen 9 bei Trolleyzügen nach dem Stande der Technik unmittelbar an den Zugkörpern 5 befestigt. Wenn die Schiene 2 dann aus der Horizontalen um den Winkel $\alpha$ schräg nach oben oder unten umgeleitet wird und sich der Trolleyzug 1 entsprechend bewegt, wird der gegenseitige Abstand der Spulen um den Faktor cos $\alpha$ verkleinert, so daß sich die in einer Reihe hängenden Spulen schließlich gegenseitig berühren und mit der Frequenz der durch den Transport erzeugten Erschütterung aneinander reiben.

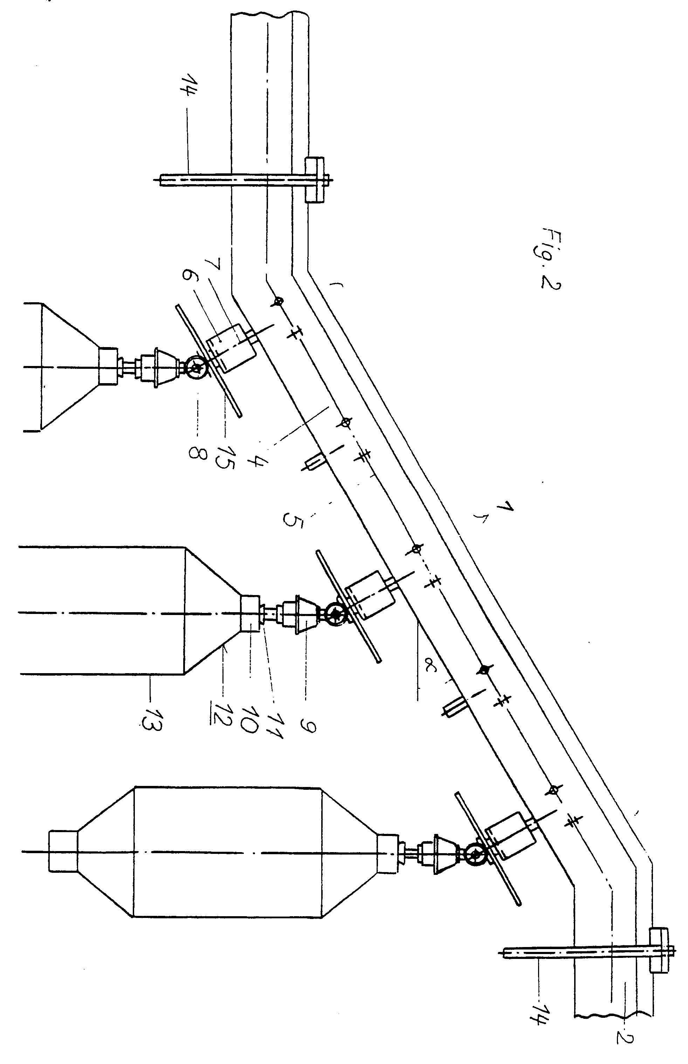

Im Ausführungsbeispiel nach Fig. 1 wird gemäß Fig. 2 bei einer Annäherung der Schiene 2 an eine Auslenkung nach oben oder unten, bevor also der Trolleyzug 1 aus der Horizontalen in eine Schräglage übergeht, jede der Brücken 8 um 90° um die Achse 7 geschwenkt, so daß die einzelnen Spulen 12 nicht mehr in einer einzigen Reihe nebeneinander sondern in einer Doppelreihe an dem Trolleyzug 1 hängen. Durch dieses Schwenken der Brücken 8 um die Achse 7 wird bezogen auf den horizontalen Transport der Abstand von Spule zu Spule mehr als verdoppelt, da anstelle von zwei hintereinander mit Schutzabstand b folgenden Spulen eine einzige Spule tritt, die weiterhin im Mittel vertikal hängt und deren Durchmesser kleiner als die Summe von zwei Spulen plus Schutzabstand b ist.

Wenn der Weg der Schiene 2 wieder in einen horizontalen Lauf einmündet, können die einzelnen Brücken 8 wieder um 90° so geschwenkt werden, daß die Spulen wiederum in einer einzigen Reihe hintereinander folgen.

Zum Umschalten der Brücke 8 aus der einen in die andere Lage kann an der Brücke beispielsweise ein Drehkreuz befestigt werden. In den Weg des Trolleyzugs 1 wird dann ein Anschlag 14 gesetzt, an dem ein Mitnehmer 15 des Drehkreuzes beim Vorbeilauf des Trolleyzugs anstößt und die Brücke 8 um die vorgesehenen 90° umschwenkt. Auf ähnliche Weise kann die Brücke 8 nach Einlauf des Trolleyzugs in die Horizontale wieder zurückgeschwenkt werden.

### Bezugszeichenliste

1 = Trolleyzug
2 = Schiene
3 = Transportrichtung
4 = Kardangelenk
5 = Zugkörper
6 = Kupplungsstück
7 = Achse
8 = Brücke
9 = Drehpendelaufhängung
10 = Hülse
11 = Tragzapfen
12 = Spule
13 = Wickel
14 = Anschlag
15 = Mitnehmer

### Ansprüche

1. Spulentransportmittel mit einem Trolleyzug (1) zum Transport einzeln in einer Reihe pendelnd hängender Spulen (12), insbesondere bespulter Flyerhülsen, wobei jeder Spule eine an eine Aufnahme (6) des Trolleyzugs anzuschließende Drehpendelaufhängung (9) zugeordnet ist,
**dadurch gekennzeichnet,**
daß je zwei Drehpendelaufhängungen (9) in einem durch den jeweiligen Spulendurchmesser bestimmten Mindestabstand (b) an einem um eine im wesentlichen vertikale Achse (7) schwenkbar an der Aufnahme (6) des Trolleyzugs (1) angebrachten Bügeln (8) zusammengefaßt sind.

2. Spulentransportmittel nach Anspruch 1,
**dadurch gekennzeichnet,**
daß in den Weg des Trolleyzugs (1) an einer Position vor Übergang von der Horizontalen in eine Schräge ein die vorbeilaufenden Brücken (8) um etwa 90° umschwenkender Anschlag (14) vorgesehen ist.

3. Spulentransportmittel nach Anspruch 2,
**dadurch gekennzeichnet,**
daß an jeder Brücke (8) ein Drehkreuz mit dem Anschlag (14) zugeordneten Mitnehmern (15) befestigt ist.

4. Verfahren zum Betrieb eines Spulentransportmittels mit einem Trolleyzug (1) zum Transport einzeln in einer Reihe pendelnd hängender Spulen (12), insbesondere bespulter Flyerhülsen, wobei jeder Spule eine an eine Aufnahme (6) des Trolleyzugs anzuschließende Drehpendelaufhängung zugeordnet wird,
**dadurch gekennzeichnet,**
daß der Abstand (b) von Spule zu Spule (6) in Transportrichtung (3) des Trolleyzugs (1) bei Erreichen einer Umlenkung des Zugs aus der Horizontalen nach oben oder unten durch paarweise Anordnung der Spulen (12) zumindest solange verdoppelt wird, bis der Trolleyzug wieder in die Horizontale einschwenkt.

Fig. 1

Fig. 2

Europäisches
Patentamt

**EUROPÄISCHER RECHERCHENBERICHT**

Nummer der Anmeldung

EP 88 10 9364

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 5, Nr. 94 (C-59)[766], 19. Juni 1981: JP-A-56 37 323 (SHIKISHIMA BOUSEKI K.K.) 11-04-1981 --- | | D 01 H 9/18<br>B 65 G 19/02<br>B 65 G 17/48 |
| A | US-A-2 471 347 (V.A. RAYBURN) --- | | |
| A | DE-B-1 071 586 (F.M. WAGONER) --- | | |
| E | EP-A-0 276 569 (HOWA MACHINERY LTD) * Figuren 1-4,12,15,22 * ----- | 1,2,4 | |
| | | | **RECHERCHIERTE SACHGEBIETE (Int. Cl.4)**<br><br>D 01 H<br>B 65 H<br>B 65 G |

Der vorliegende Recherchenbericht wurde für alle Patentansprüche erstellt

| Recherchenort | Abschlußdatum der Recherche | Prüfer |
|---|---|---|
| DEN HAAG | 11-10-1988 | D HULSTER E.W.F. |